# EUROPEAN PATENT SPECIFICATION

(11) **EP 3 569 396 B1**
(45) Date of publication and mention of the grant of the patent: **16.11.2022**
(21) Application number: 18172096.2
(22) Date of filing: 14.05.2018
(51) Int. Cl.: B29D 99/00, B29C 64/106, B33Y 80/00, B33Y 10/00, B29C 70/38

(54) **METHOD FOR FORMING A STRUCTURAL COMPONENT FOR AN AIRFRAME OF AN AIRCRAFT OR SPACECRAFT AND STRUCTURAL COMPONENT FOR AN AIRFRAME OF AN AIRCRAFT OR SPACECRAFT**
VERFAHREN ZUR FORMUNG EINER STRUKTURELLEN KOMPONENTE FÜR EIN FLUGWERK EINES FLUGZEUGS ODER RAUMFAHRZEUGS UND STRUKTURELLE KOMPONENTE FÜR EIN FLUGWERK EINES FLUGZEUGS ODER RAUMFAHRZEUGS
PROCÉDÉ DE FORMATION D'UN COMPOSANT STRUCTURAL POUR UNE CELLULE D'UN AÉRONEF OU D'UN ENGIN SPATIAL ET COMPOSANT STRUCTURAL POUR UNE CELLULE D'UN AÉRONEF OU D'UN ENGIN SPATIAL

(43) Date of publication of application: 20.11.2019
(73) Proprietor: Airbus Operations GmbH, 21129 Hamburg (DE); Airbus Operations Ltd., Filton, Bristol BS99 7AR (GB)
(72) Inventor: Cole, John, Stroud, GL5 1NY (GB); Heltsch, Norbert, 21129 Hamburg (DE); Linde, Peter, 21129 Hamburg (DE)
(74) Representative: Isarpatent

(56) References cited:
- Shuting Liu et al.: "A novel free-hanging 3D printing method for continuous carbon fiber reinforced thermoplastic lattice truss core structures", MATERIALS AND DESIGN, 4 October 2017 (2017-10-04), pages 235-244, XP002785905, Retrieved from the Internet: URL:https://doi.org/10.1016/j.matdes.2017. 10.007 [retrieved on 2018-10-19]
- KENTARO SUGIYAMA ET AL.: "3d printing of integrated composite honeycomb sandwich structures with continuous carbon fiber", 21ST INTERNATIONAL CONFERENCE ON COMPOSITE MATERIALS, 22 August 2017 (2017-08-22), - 25 August 2017 (2017-08-25), XP002785906, xi'an

## Description

### FIELD OF THE INVENTION

The present invention pertains to a method for forming a structural component for an airframe of an aircraft or spacecraft and to a structural component for an airframe structure of this type.

Although this invention is especially designed for use in the aircraft and aerospace industries, it will be appreciated that it may also be employed in other structural applications, for example nautical and/or land vehicle applications.

### BACKGROUND OF THE INVENTION

In aircraft and aerospace industries, stiffened panels, and especially stringer-stiffened panels have become standard as a light-weight construction solution. In this regard, a "stringer" is a stiffening member which increases the out-of-plane bending stiffness of a structural panel, in particular of a fuselage skin. With such stringers, a panel is particularly reinforced against buckling under compression and shear loading.

In aviation history, there have been other structural approaches, such as e. g. a light metal frame with its lattice structure of the Vickers Wellington (World War II). In this construction method, light metal rods were connected diagonally to form a grid structure and then covered with fabric. The result was a very stiff, yet light and robust structure in which usually only the covering was damaged by fire.

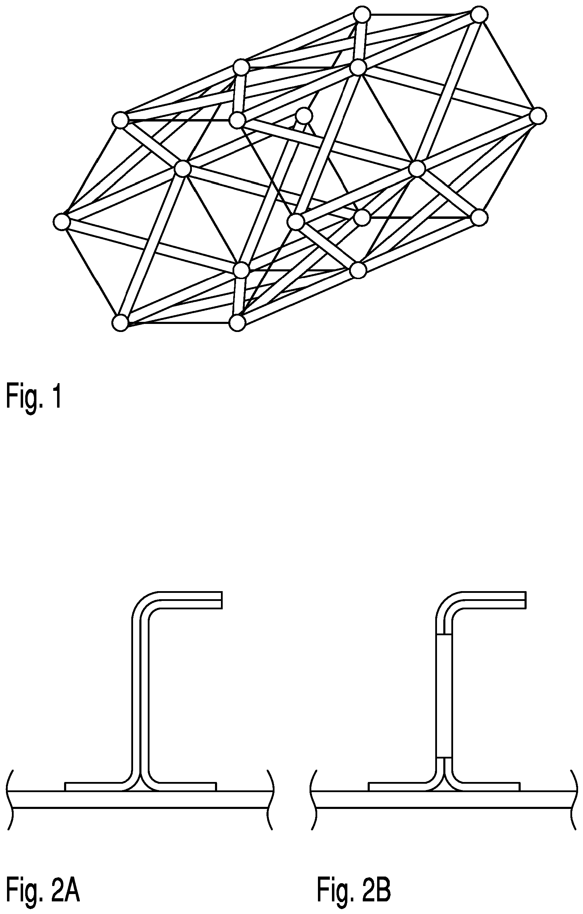

Fig. 1 shows a general grid truss having a hexagonal cross-section and consisting of a plurality of struts bonded to each other at nodes and crossing points of the struts. Such trusses are also called space trusses and comprise regular diagonal and orthogonal struts. Grid trusses become increasingly applied in civil and mechanical engineering. Particularly, columns and beams until now commonly build out of reinforced concrete or heavy steel profiles, are getting replaced by such truss structures.

Attempts have been made to use a grid approach for fiber composite materials. For example US 4,137,354 describes a flat grid structure for stiffening a panel, wherein fibers are arranged in rows on the flat panel triangularly crossing at nodes where the fibers of the crossing rows are interlaced. Such grid structures are also known as isogrid. Furthermore, EP 0 986 685 B1 describes a special three dimensional truss structure formed by wrapping a fiber around a mandrel to create a plurality of helical components and reverse helical components, adding a matrix to the fiber and curing the matrix. In this way, a very light and stiff grid truss is provided, which is also known as iso-truss.

XP002785905 Shuting Liu et al. "A novel free-hanging 3D printing method for continuous carbon fiber reinforced thermoplastic lattice truss core structures" MATERIALS AND DESIGN, 4 October 2017, pages 235-244, describes a process for printing three-dimensional lattice truss structures for use as sandwich cores. The Continuous Fiber Reinforced Thermoplastic (CFRTP) lattice truss core structures ae potential to aerospace engineering because of their high weight reduction efficiency and multifunctional application. The free-hanging printing path generation strategy was established to realize the undercut and overhanging truss structure without any support. First, a free hanging three dimensional pyramidal lattice truss structure is printed. The printed lattice truss core is being bonded with the top and bottom face sheets by epoxy adhesive.

In structural components for air- or spacecraft applications, stiffener elements, particularly stringers and frames, are usually configured as so called filled shells, see Fig 2A. New approaches of removed material in stiffening structures are internally known by the applicant. Fig. 2B illustrates a stringer of a similar type with a local cut out in a central portion. Base on the so-called Steiner's rule in strength of materials, a stringer with reduced weight which is capable of carrying out the same functions can be achieved in this way.

### SUMMARY OF THE INVENTION

Against this background, it is one object of the present invention to provide an improved method for forming a structural component and an improved structural component for an airframe of an aircraft or spacecraft.

This object is solved by a method for forming a structural component for an airframe of an aircraft or spacecraft, comprising: providing a prefabricated shell element comprising a thermoplastic substrate; and applying a stiffening structure to the shell element by additive manufacturing, wherein a plurality of continuous thermoplastic filaments filled with reinforcing fibers are continuously heated and three dimensionally formed such that the filaments are crossing and bonded to each other at a plurality of crossing points to form a three dimensional grid truss integrally formed on the shell element.

Furthermore, the object is solved by a structural component for an airframe structure comprising: a shell element comprising a thermoplastic substrate; and a stiffening structure comprising a three dimensional grid truss integrally formed on the shell element, wherein the grid truss comprises a plurality of continuous thermoplastic filaments filled with reinforcing fibers, which filaments are arranged crossing each other and bonded to each other at their crossing points and bonded to the shell element at contacting points or lines between the filaments and the shell element.

In addition, the object is solved by an aircraft or spacecraft comprising an airframe, wherein the airframe comprises a structural component according the invention and/or is formed with a method according to the invention.

One idea of the present invention is to combine a regular stiffened panel construction with an additively manufactured lattice structure, based on a thermoplastic material concept. This is achieved by providing a conventional thermoplastic shell element for an airfoil, for example a skin panel, which may be manufactured by a conventional large scale and fast technology e. g. by press forming or by an automated tape laying (ATL) process, and using additive layer manufacturing (ALM) technology for forming a thermoplastic stiffening structure integrally directly on the shell. The stiffening structure is manufactured with a plurality of continuous filaments formed and bonded in the manner of a three dimensional grid truss directly on the shell element. The shell element in particular forms one side of the cross section of the grid truss. In this way, an integral stiffening structure is provided on the shell element.

Advantageously, the invention provides a new design freedom for stiffening structures. Additive manufacturing allows free material concentration at any portion of the shell element. Between the crossing points, each filament forms an individual strut, preferably a straight strut, of a grid truss. A plurality of such grid trusses can be formed integrated on the shell element and freely arranged thereon according to local stiffness requirements. Due to the continuous application of filaments, a high overall stiffness is achievable in his way.

Therefore, the invention allows an almost free optimization of the stiffening structure and still keeps the shell element closed and pressure resistant without adding or even reducing weight compared to a conventional stringer design. Advantageous properties of regular panel construction, in particular a pressure tight fuselage, can be maintained and at the same time advantageous properties of a lattice structure can be used. In particular a lightweight stiffening structure can be achieved due to the freedom to concentrate material where mechanically necessary by locally providing a higher density of filaments, in particular by narrowing the grid, and to dissipate material where mechanically dispensable by locally spacing the filaments, in particular by widening the grid.

Due to the application of additive manufacturing technology, which advantageously allows almost constraint-free forming of thermoplastic structures, the present invention allows implementation of all types of grid trusses for stiffening airfoil shells, which have not been used before. In particular, the invention allows spatial stiffener designs with a high life load to dead load ratio.

An integral three-dimensional grid truss is additively built directly on the shell element, which means that the shell element usually forms one side of the truss section. For this reason, the filaments are bonded to the shell element at connecting points or lines forming nodes of the cross-section. The plurality of filaments spatially extend from such connecting points protruding from the shell element to form a desired three dimensional grid truss extending along the shell element and stiffening the shell element. For example in case of a hexagonal grid truss design, five sides of a hexagonal grid truss are formed by the grid structure of the filaments extending from the shell element and the sixth side is formed by the shell element, the filaments are bonded to. Of course, this principle can be applied to any polygonal cross-section of a grid truss, in particular also to triangle, square, pentagonal cross sections, or the like.

According to the invention, any grid patterns of the filaments three dimensionally extending from the shell element can be easily manufactured by way of additive manufacturing. The grid formed by the filaments can be of any suitable nature. Preferably, the filaments form a triangular grid, e. g. with filaments in 0°, +45°, -45° and 90° orientation. The filaments may for example be arranged in a so called iso-grid pattern employing regular diagonal and orthogonal struts for 60° triangular patterns. In contrast to usual iso-grid panels, the filaments according to the invention are three dimensionally extending from the shell element. Thus, the term grid pattern is to be understood here as a local relation between the filaments. Other grid patterns, such as rectangular, hexagonal or the like, are possible. E. g. so called ortho-grid or angle-grid patterns may be formed using diagonal or orthogonal struts for 90° square patterns. Of course, other kinds of grid patterns, such as honey comb patterns or the like, are also possible.

At least some but not necessarily all of the filaments are bonded to the shell element. For example, 0° filaments extending from one longitudinal end of the grid truss to the other can be applied in addition to +45°, -45° and 90° filaments and bonded thereto at the crossing points only.

Advantageous embodiments and improvements of the present invention are found in the subordinate claims.

According to an embodiment, the filaments comprise a thermoplastic matrix material filled with continuous fibers, in particular continuous carbon fibers. In this way high strength stiffening structures can be achieved in a continuous additive process. Preferably, one filament comprises a tow of continuous fibers providing enough strength for one filament to form an independent strut between two crossing points.

According to yet another embodiment the filaments are at least locally heated to a melting temperature prior to the application by a first laser beam for bonding with each other. In the same way, the filaments are heated for bonding with the shell element. In this way, the filaments can be directly bonded when placed on a crossing point or connecting point or line and no further bonding step is necessary.

According to an embodiment, the thermoplastic substrate of the shell element prior to the application of the filaments is locally heated by a second laser beam for bonding with the filaments. In this way, both the filament and the substrate are heated. Accordingly, the thermoplastic material adheres at both sides and a strong material connection is achieved.

According to an embodiment, the filaments are consolidated by means of at least one ironing pad subsequent to the heating. In this way, the filaments can be directly formed in the desired geometry and bonded. Preferably, one or more ironing pads are integrated in a ALM head together with a heating device, such as for example a laser source and/or optic, to melt, form, bond and consolidate a filament in one step.

According to an embodiment, the filaments are arranged to together with the shell element form a truss section. In this way, one side of the truss section is formed by the shell element. Accordingly, the grid truss is formed directly on the shell element and integral with the shell element. For example, the truss section may be configured as a hat section, a hexagonal section or a T-section.

According to a preferred embodiment, between two crossing points each filament forms an independent truss strut. Accordingly, a fiber displacement printer comprising an ALM head is used for forming the filaments, which can print filaments thick enough and containing all the needed fibers for reinforcement of one strut. In this way, manufacturing the stiffening structure is realized in a rapid continous way.

According to an embodiment, for applying the stiffening structure a first filament is bonded to the shell element at a first end, then three dimensionally formed free standing along a predetermined trajectory of the grid truss and bonded to the shell element at a second end. Furthermore, a second filament is bonded to the shell element at a first end, then three dimensionally formed along a predetermined trajectory of the grid truss crossing the first filament, bonded to the first filament at a crossing point and bonded to the shell element at a second end. In particular, the first ends of the first and second filaments may be oriented in parallel and the second ends of the first and second filaments may be oriented in parallel. In this way, an integral grid truss structure with continuous filaments can be easily built filament by filament on the shell element such that the shell element finally forms part of the truss section.

According to a preferred development, a third filament is three dimensionally formed along a predetermined trajectory of the grid truss crossing the first filament and the second filament and bonded to the first filament and to the second filament at respective crossing points. Similarly, further filaments are formed along a predetermined trajectory of the grid truss crossing the first filament and the second filament and bonded to the first filament and to the second filament at respective crossing points until the grid truss is complete. The further filaments may also comprise filaments which are not bonded to the shell element but only to the other filaments, in particular so called 0° filaments extending longitudinally along the grid truss. Furthermore, the further filaments may comprise transverse or 90° filaments directly extending from one lateral side of the grid truss to the other. In this way, the integral grid truss can be completed by additive manufacturing and provide high stiffness for the shell element.

The predetermined trajectory of the grid truss can be freely chosen according to local structural requirements. In this way, the stiffening structure can be almost freely optimized.

Preferably at all contact points with the skin element or already existing crossing struts formed by the first and second filaments, the material of both bonding partners is heated for bonding.

According to an embodiment of the structural component, the filaments comprise a thermoplastic matrix material filled with continuous fibers, in particular continuous carbon fibers.

According to an embodiment, the filaments are cranked at least at some crossing points and straight between the crossing points to form a three dimensional contour of the truss. In this way, a three dimensional structure of the grid truss can be achieved.

According to an embodiment, the filaments are arranged in a triangular grid configuration, in particular in an iso-grid configuration. In this way, high strength is achieved, particularly against buckling under compression and shear loading.

According to a further embodiment of the structural component, the filaments are arranged to together with the shell element form a truss section, in particular a hat section, hexagonal section or T-section.

All features of a method for forming a structural component can be applied to such a structural component, and vice versa.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

### BRIEF DESCRIPTION OF THE DRAWINGS

- Fig. 1: schematically illustrates an exemplary conventional grid truss.
- Fig. 2A: shows a cross section of a conventional full shell stringer.
- Fig. 2B: shows a cut-out stringer internally known by the applicant.
- Fig. 3: schematically illustrates a cross section of a structural component comprising a hexagonal grid truss according to an embodiment of the present invention.
- Fig. 4: schematically illustrates a cross section of a structural component comprising a T-section grid truss according to an embodiment of the present invention.
- Fig. 5: schematically illustrates a cross section of a structural component comprising a hat section grid truss according to an embodiment of the present invention.
- Fig. 6: shows application of a filament to a shell element.
- Fig. 7: shows free forming of a filament extending from a shell element.
- Figs. 8A-8D: schematically illustrate steps of applying a stiffening structure according to an embodiment of the present invention.
- Fig. 9: schematically illustrates a structural component according to an embodiment of the present invention.
- Fig. 10: schematically illustrates an aircraft or spacecraft.

Although specific embodiments are illustrated and described herein, it will be appreciated by those of ordinary skill in the art that a variety of alternate and/or equivalent implementations may be substituted for the specific embodiments shown and described without departing from the scope of the present invention.

Generally, this application is intended to cover any adaptations or variations of the specific embodiments discussed herein.

### DETAILED DESCRIPTION OF EMBODIMENTS

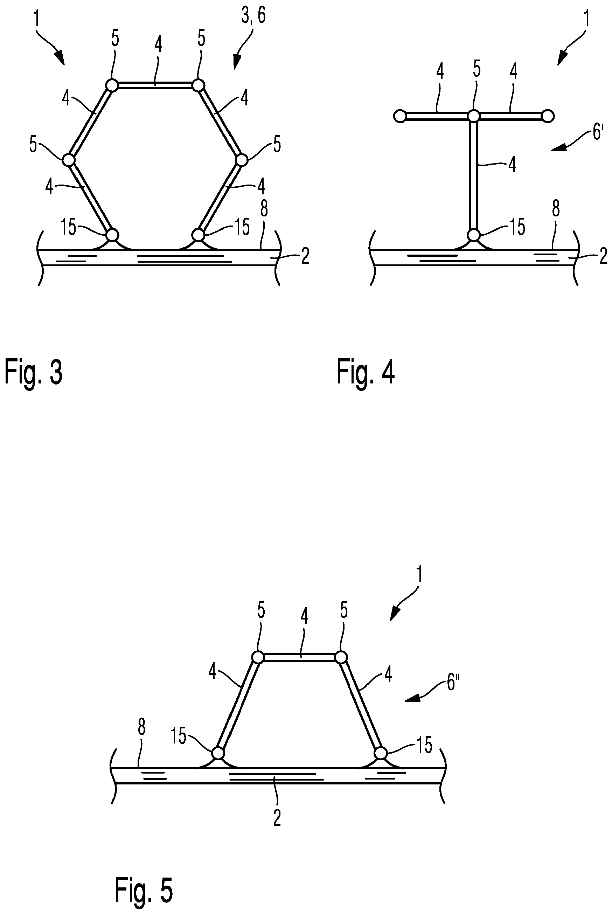

Fig. 3 schematically illustrates a cross section of a structural component 1 comprising a hexagonal grid truss 6 according to an embodiment of the present invention.

The structural component 1 is configured for an airframe structure, in for particular for a fuselage structure, of an aircraft or spacecraft and comprises a shell element 2 comprising a thermoplastic substrate 8 and a stiffening structure 3 comprising a three dimensional grid truss 6 integrally formed on the shell element 2. The grid truss 6 is formed by a plurality of continuous thermoplastic filaments 4, which are filled with reinforcing fibers, preferably continuous carbon fibers, and bonded to the shell element 2.

The filaments are arranged along the trajectory of the grid truss, which in the present example has a hexagonal cross-section. In other embodiments, other cross sectional shapes are possible, such as hat section, T-section or L-section.

The filaments 4 have predefined different orientations such that they cross each other and meet the shell element 2. Furthermore, at least some filaments 4 can be arranged offset to the others. In the present example, at least some of the crossing points 5 form nodes of the hexagonal cross-section and the filaments 4 are cranked at the crossing points 5 to form the three dimensional hexagonal contour of the grid truss 6.

At the crossing points 5, the filaments are bonded to each other, preferably by thermoplastic welding. Furthermore, the filaments 4 are bonded to the shell element 2 at contacting points 15 between the filaments 4 and the shell element 2. Preferably, the filaments 4 are also welded to the thermoplastic substrate 8 of the shell element 2.

The contact points 15 are arranged along two parallel lines of nodes of the hexagonal structure along the truss. The contacting points 15 can form an end of a respective filament 4, which is bonded to the shell element. Alternatively, a filament may be bonded to the shell element 2 along a line in a middle part and run meander-like on the trajectory of the grid truss 6, in particular along the complete length of the grid truss 6. With such an arrangement of the filaments, the shell element 2 forms one side of the hexagonal cross-section of the grid truss 6, which accordingly is formed integrally on the shell element 2.

Fig. 4 schematically illustrates a cross section of a structural component 1 comprising a T-section grid truss 6' according to an embodiment of the present invention.

According to this embodiment, the filaments 4 are arranged in such a manner that they follow the trajectory of a T grid truss. Accordingly, there is only one line of nodes of the T section forming the contact points 15 between the filaments 4 and the shell element 2.

Fig. 5 schematically illustrates a cross section of a structural component comprising a hat section grid truss 6" according to an embodiment of the present invention.

In contrast to the embodiment of fig. 3, the grid truss 6" according to this embodiment has a trapezoid cross section, which is also called hat section. Similar to fig. 3, two parallel lines of nodes form the contacting points 15 between filament 4 and shell element 2. However, there are only two additional nodes forming crossing points 5 of the filaments between the contacting points 15.

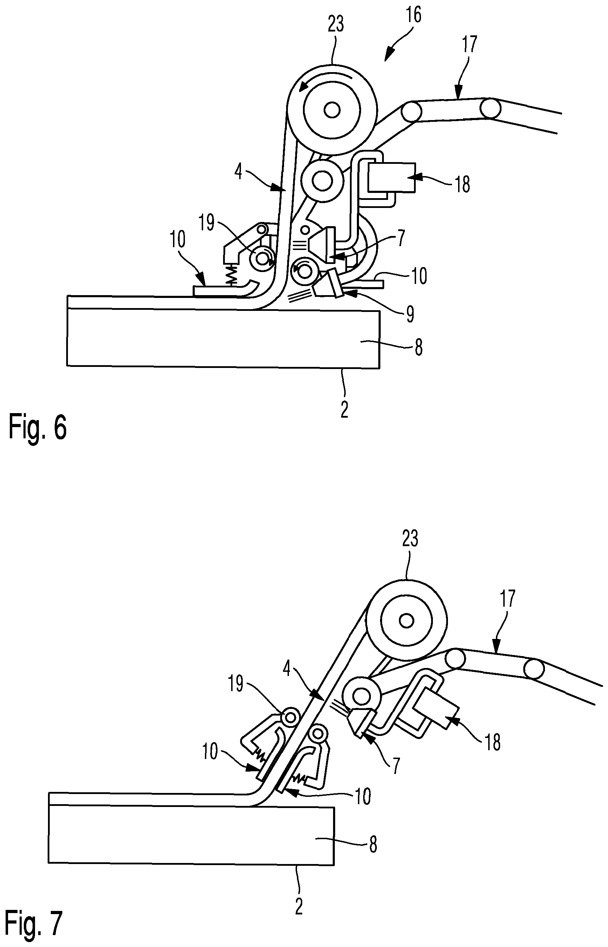

Fig. 6 shows an application of a filament 4 to a shell element 2.

The filament 4 is formed and applied to the shell element 2 by means of an additive layer manufacturing (ALM) head 16 mounted on a robotic arm 17. The shell element 2 is a prefabricated thermoplastic fiber reinforced panel, for example a skin panel, prefabricated by fast large scale technologies such as press forming or automated tape laying (ATL). The shell element comprises a thermoplastic substrate 8, e. g. a thermoplastic matrix.

According to the present invention, a stiffening structure 3 is applied to the prefabricated shell element 2 by means of additive manufacturing, wherein a plurality of filaments 4 are formed as an integral grid truss 6 on the shell element 2. The ALM head 16 therefore heats and melts the thermoplastic fiber reinforced filaments 4, which are preferably filled with a tow of continuous carbon fibers.

According to the present example, such filaments 4 are provided as a prefabricated filament coil 23 and heated by means of a first laser beam 7. However, filaments could also be conductively heated or even directly printed from raw fibers and a thermoplastic material, which includes heating.

The welding head 16 comprises a laser source 18 and a corresponding laser optic for generating and guiding the first laser beam 7 onto the filament 4. In addition, the laser source 18 is also used to provide a second laser beam 9 with another laser optic, which second laser 9 beam is used for heating and locally melting the substrate 8 for bonding with the filaments 4. In this way, the thermoplastic materials of the filament 4 and the substrate 8 can be easily bonded.

Furthermore, the ALM head 16 comprises a plurality of ironing pads 10 provided for consolidation of the filament 4. Fig. 6 shows a first state of the ALM head 16, in which one ironing pad 10 is pressing the molten filament 4 onto the molten substrate 8 in order to create a strong connection.

The ALM head 16 for example comprises two such ironing pads 10 which can be used together or independently from each other for consolidation. In the first state shown in figure 6, only one of the ironing pads 10 is in use for pressing the filament 4 against the substrate 8 and the other pad 10 is pivoted to a side.

Furthermore, the ALM head 16 comprises guide rollers 19 to guide the filament 4 in a molten state in the desired direction and to the desired location.

Fig. 7 shows free forming of a filament 4 extending from a shell element 2.

In order to realize a free forming of the filament, both ironing pads 10 are used for consolidation in a second state to steer the filament in a desired direction. The consolidated material thus will be standing free in its desired position as the ALM head 16 moves along.

The second laser beam 9 can be switched of at this stage. The filament 4, which is molten by the first laser beam 7, can be formed starting from the substrate 8 along a three dimensional working path of the ALM head 16 moved by the robotic arm 17. According to the present invention, the ALM head is moved along a predetermined trajectory of a grid truss 6. The three dimensional form of the filament is maintained by consolidation of the filament with both ironing pads 10 contacting the filament from two opposing sides. In this way, the filament 4 can be built free standing. A three dimensional grid truss 6 can be formed out of a plurality of such filaments 4 crossing and bonded to each other at a plurality of crossing points.

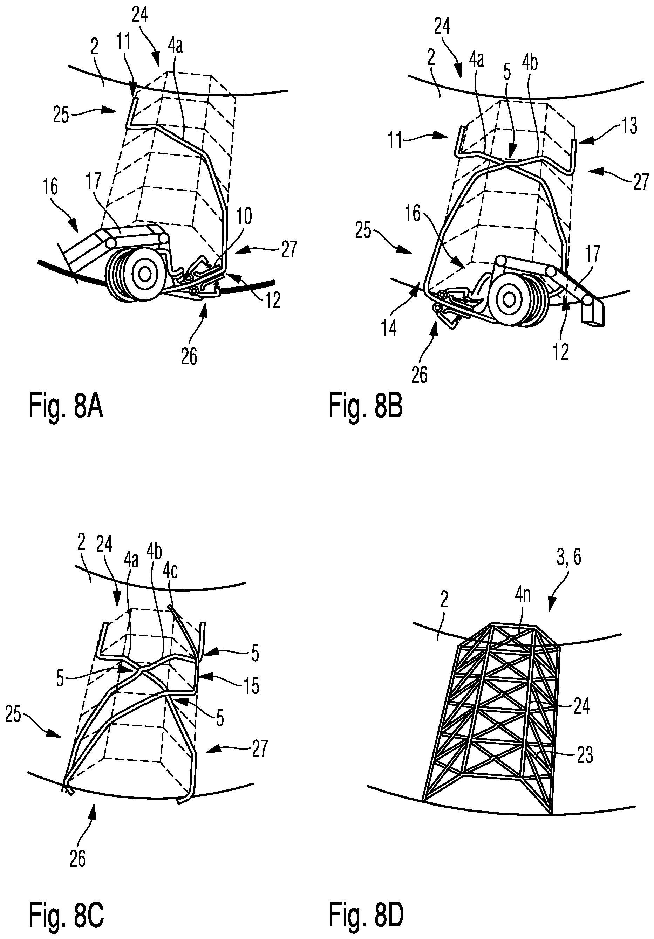

Figs. 8A-8D schematically illustrate steps of applying a stiffening structure 3 according to an embodiment of the present invention.

In particular, figures 8A to 8D show a sequence of displacement of a plurality of filaments 4a, 4b, 4c, ..., 4n on a shell element 2 for forming an integral grid truss 6.

The ALM head 16 is configured to displace thermoplastic filaments 4 filled with reinforcing fibers in such a manner to manufacture a strut of the grid truss 6 by one filament 4 containing all the needed fibers for reinforcement of the strut.

In this way, a structural component 1 for an airframe of an aircraft or spacecraft can be formed according to a method of the present invention. Therefore, in a first step, a prefabricated shell element 2 comprising a thermoplastic substrate 8 is provided. In the present example, the shell element 2 is configured as a fuselage skin panel. In a second step, a stiffening structure 3 is applied to the shell element 3 by additive manufacturing, wherein a plurality of continuous thermoplastic filaments 4a, 4b, 4c, ..., 4n filled with reinforcing fibers are continuously heated and three dimensionally formed by an ALM head, as explained with regard to figures 6 and 7. The filaments 4a, 4b, 4c, ..., 4n are formed crossing and bonded to each other at a plurality of crossing points 5 to form a three dimensional grid truss 6 integrally formed on the shell element 2.

According to Fig. 8A, a first filament 4a is bonded to the shell element 2 at a first end 11 in the manner as explained with regard to fig. 6. Then the first filament 4a is three dimensionally formed free standing along a predetermined trajectory of the grid truss 6. This trajectory is predetermined by the desired path and the cross sectional form of the grid truss 6, which is depicted here with dashed lines.

The forming of the first filament 4a is realized in the way as explained with regard to fig. 7 and the form of the filament 4a is defined by the movement path of the ALM head 16.

At a second end 12, the filament 4 is bonded to the shell element 2 again in the manner according to fig. 6. In the present example, the first end 11 of the first filament 4a is positioned on a first side 25 of a hat section and a first longitudinal end 24 of the grid truss 6 and a second end 12 is positioned on a second side 27 of the hat section and a second longitudinal end 26 of the grid truss 6.

According to fig. 8B, a second filament 4b is bonded to the shell element 2 at a first end 13. The first end 13 is positioned opposing to the first end 11 of the first filament 4a and in parallel thereto on the second side 27 of the hat section at the first longitudinal end 24.

The second filament 4b is then three dimensionally formed along the predetermined trajectory of the grid truss 6 and thereby crosses the first filament 4a. At a crossing point 5, the second filament 4b is bonded to the first filament 4a. Furthermore, a second end 14 of the second filament 4b is bonded to the shell element 2 at a position opposing to the second end 12 of the first filament 4a and in parallel thereto on the first side 25 of the hat section at the second longitudinal end 26.

Fig. 8C shows a third filament 4c applied three dimensionally formed along the predetermined trajectory of the grid truss 6. The third filament 4c starts on the first longitudinal end 24 in a central part of the hat section. In contrast to the first and second filaments 4a, 4b, the third filament 4c is bonded to the shell element 2 at a contacting point 15 which is not at a longitudinal end but in a middle part of the third filament 4c. Furthermore, the third filament 4c crosses the first filament 4a and the second filament 4b at new crossing points 5 and is bonded to the first and second filament 4a, 4b. Accordingly, the third filament 4c is formed on the trajectory of the truss 6 offset with respect to the first and second filaments 4a, 4b. In the same way, further filaments 4n are applied offset thereto until the grid truss 6 is complete.

The number of filaments 4n necessary to complete the truss 6 depends on the actual geometry and size of the grid truss 6 and density and pattern of the desired grid. At all contact points 15 with the shell element 2 and crossing points 5, preferably both the newly applied and previously applied material is heated so as to obtain a strong welded connection.

Fig. 8D shows the complete grid truss 6 with the filaments 4a, 4b, 4c, ..., 4n. In addition, longitudinal 0° filaments 24 and transverse 90° filaments 23 have been added crossing and bonded to the filaments 4a, 4b, 4c, ..., 4n at crossing points. All filaments 4a, 4b, 4c, ..., 4n, 23 and 24 together with the shell element 2 form a grid truss 6. In the present example, the grid truss is formed with a hollow cross section. However, a grid truss is not necessarily formed hollow. According to other embodiments, a grid truss 6 may also comprise diagonal struts crossing a hollow cross sectional truss profile, connecting for example opposing nodes.

In the present example the cross section forms a hat section as explained with respect to fig. 5. However, other truss sections may be formed in a similar way, for example a hexagonal section or a T-section as shown in figures 3 and 4.

In the complete grid truss 6, each filament 4a, 4b, 4c, ..., 4n between two crossing points 5 forms an independent truss strut. In this way, the filaments 4a, 4b, 4c, ..., 4n are arranged in a regular triangular grid configuration, for example. According to further embodiments, the grid structure may have any other configuration, such as a square grid or a honey come grid. Furthermore, such a grid is not necessarily regular, but may be locally optimized to actual strength requirements, for example by locally providing a higher or lower density of struts by adding or removing filaments and/or by locally spreading or concentrating the filaments.

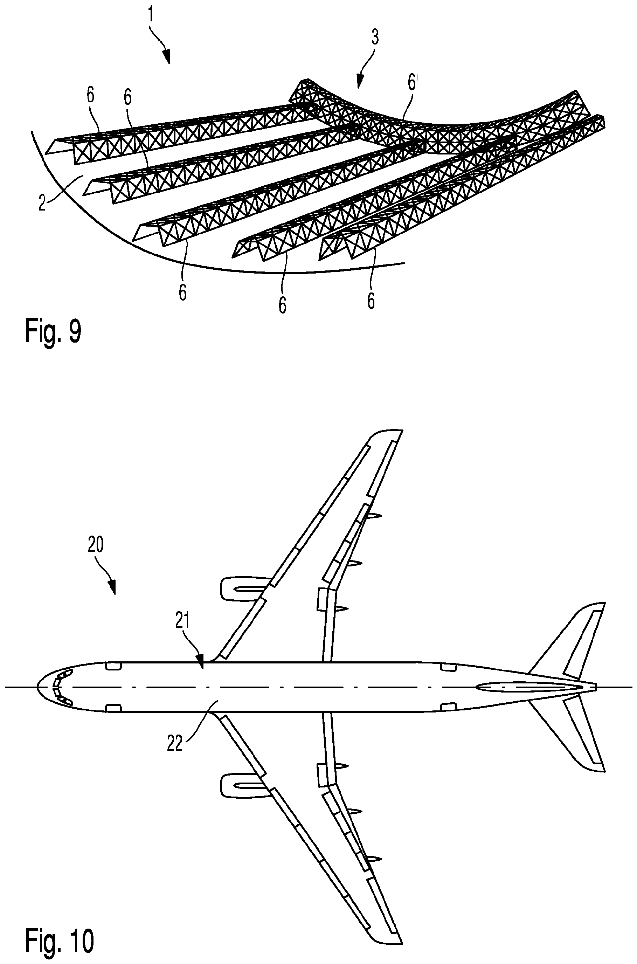

Fig. 9 schematically illustrates a structural component 1 according to an embodiment of the present invention.

The structural component 1 comprises a shell element 2 formed as a fuselage skin shell and comprising a stiffening structure 3 with a plurality of axial integral grid trusses 6 with a hat section as of fig. 8D.

Furthermore, a radial integral grid truss 6‴ with an L-section is provided and connected to the axial grid trusses 6, in particular by thermoplastic welding.

Fig. 10 schematically illustrates an aircraft or spacecraft 20.

The aircraft 20 comprises an airframe 21, wherein the airframe 21 comprises a structural component 1 according to one of the preceding figures 3 to 9. For example, the fuselage 22 of the airframe 21 is formed with a fuselage skin shell according to Fig. 9.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements as defined in the appended claims

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### LIST OF REFERENCE SIGNS

- 1: structural component
- 2: airframe
- 3: stiffening structure
- 4: filament
- 4a: first filament
- 4b: second filament
- 4c: third filament
- 4n: further filaments
- 5: crossing point
- 6; 6'; 6": grid truss
- 7: first laser beam
- 8: shell element
- 9: second laser beam
- 10: ironing pad
- 11: first end
- 12: second end
- 13: first and
- 14: second end
- 15: contacting point
- 16: ALM head
- 17: robotic arm
- 18: laser source
- 19: guide roller
- 20: aircraft
- 21: airframe
- 22: fuselage
- 23: filament coil
- 24: first longitudinal end
- 25: first side
- 26: second longitudinal end
- 27: second side

## Claims

1. Method for forming a structural component (1) for an airframe (21) of an aircraft or spacecraft (20), comprising:
providing a prefabricated shell element (2) comprising a thermoplastic substrate (8); and
applying a stiffening structure (3) to the shell element (2) by additive manufacturing, wherein a plurality of continuous thermoplastic filaments (4; 4a, 4b, 4c, ..., 4n) filled with reinforcing fibers are continuously heated and three dimensionally formed such that the filaments (4; 4a, 4b, 4c, ..., 4n) are crossing and bonded to each other at a plurality of crossing points (5) to form a three dimensional grid truss (6; 6'; 6") integrally formed on the shell element (2).

2. Method according to claim 1, wherein the filaments (4a, 4b, 4c, ..., 4n) comprise a thermoplastic matrix material filled with continuous fibers, in particular continuous carbon fibers.

3. Method according to claim 1 or 2, wherein prior to the application the filaments (4; 4a, 4b, 4c, ..., 4n) are at least locally heated to a melting temperature by a first laser beam (7) for bonding with each other and/or with the shell element (8).

4. Method according to any one of the preceding claims, wherein the thermoplastic substrate (8) of the shell element (2) prior to the application of the filaments (4; 4a, 4b, 4c, ..., 4n) is locally heated by a second laser beam (9) for bonding with the filaments (4; 4a, 4b, 4c, ..., 4n).

5. Method according to any one of the preceding claims, wherein subsequent to the heating the filaments (4; 4a, 4b, 4c, ..., 4n) are consolidated by means of at least one ironing pad (10).

6. Method according to any one of the preceding claims, wherein the filaments (4; 4a, 4b, 4c, ..., 4n) are arranged to together with the shell element (2) form a truss section, in particular a hat section, a hexagonal section or a T-section.

7. Method according to any one of the preceding claims, wherein between two crossing points (5) each filament (4; 4a, 4b, 4c, ..., 4n) forms an independent truss strut.

8. Method according to any one of the preceding claims, wherein for applying the stiffening structure:
- a first filament (4a) is bonded to the shell element (2) at a first end (11), then three dimensionally formed free standing along a predetermined trajectory of the grid truss (6; 6'; 6") and bonded to the shell element (2) at a second end (12); and
- a second filament (4b) is bonded to the shell element at a first end (13), then three dimensionally formed along a predetermined trajectory of the grid truss (6; 6'; 6") crossing the first filament (4a), bonded to the first filament (4a) at a crossing point (5) and bonded to the shell element (2) at a second end (14).

9. Method according to claim 8, wherein a third filament (4c) and/or further filaments (4n) are three dimensionally formed along a predetermined trajectory of the grid truss (6; 6'; 6") crossing the first filament (4a) and the second filament (4b) and bonded to the first filament (4a) and to the second filament (4b) at respective crossing points (5) until the grid truss is complete.

10. Structural component (1) for an airframe structure (21) comprising:
a shell element (2) comprising a thermoplastic substrate (8); and
a stiffening structure (3) comprising a three dimensional grid truss (6; 6'; 6") integrally formed on the shell element (2), wherein the grid truss (6; 6'; 6") comprises a plurality of continuous thermoplastic filaments (4; 4a, 4b, 4c, ..., 4n) filled with reinforcing fibers, which filaments are arranged crossing each other and bonded to each other at their crossing points (5) and bonded to the shell element (2) at contacting points or lines (15; 11, 12, 13, 14) between the filaments (4; 4a, 4b, 4c, ..., 4n) and the shell element (2).

11. Structural component (1) according to claim 10, wherein the filaments (4; 4a, 4b, 4c, ..., 4n) comprise a thermoplastic matrix material filled with continuous fibers, in particular continuous carbon fibers.

12. Structural component (1) according to claim 10 or 11, wherein the filaments (4; 4a, 4b, 4c, ..., 4n) are cranked at some crossing points and straight between the crossing points to form a three dimensional contour of the truss.

13. Structural component (1) according to any one of claims 10 to 12, wherein the filaments (4; 4a, 4b, 4c, ..., 4n) are arranged in a triangular grid configuration, in particular in an iso-grid configuration.

14. Structural component (1) according to any one of claims 10 to 13, wherein the filaments (4; 4a, 4b, 4c, ..., 4n) are arranged to together with the shell element (2) form a truss section, in particular with a hat section, hexagonal section or T-section.

15. Aircraft or spacecraft (20) comprising an airframe (21), wherein the airframe (21) comprises a structural component (1) according to one of the claims 10 to 14 and/or formed with a method according to one of claims 1 to 9.

## Patentansprüche

1. Verfahren zum Herstellen eines Strukturbauteils (1) für eine Flugzeugstruktur (21) eines Luft- oder Raumfahrzeugs (20), umfassend:
Bereitstellung eines vorgefertigten Schalenelements (2), das ein thermoplastisches Substrat (8) umfasst; und
Anbringen einer Versteifungsstruktur (3) an das Schalenelement (2) durch additive Fertigung, wobei eine Vielzahl von kontinuierlichen thermoplastischen Filamenten (4; 4a, 4b, 4c, ..., 4n), die Verstärkungsfasern umfassen, kontinuierlich erhitzt und dreidimensional geformt werden, so dass die Filamente (4; 4a, 4b, 4c, ...., 4n) sich kreuzen und an einer Vielzahl von Kreuzungspunkten (5) miteinander verbunden werden, um ein dreidimensionales Gitterfachwerk (6; 6'; 6") zu bilden, das einstückig auf dem Schalenelement (2) ausgebildet ist.

2. Verfahren nach Anspruch 1, wobei die Filamente (4a, 4b, 4c, ..., 4n) aus einem thermoplastischen Matrixmaterial bestehen, welches Endlosfasern, insbesondere Endloskohlefasern, umfasst.

3. Verfahren nach Anspruch 1 oder 2, bei dem die Filamente (4; 4a, 4b, 4c, ..., 4n) vor dem Auftragen durch einen ersten Laserstrahl (7) zumindest lokal auf eine Schmelztemperatur erwärmt werden, um sich miteinander und/oder mit dem Schalenelement (2) zu verbinden.

4. Verfahren nach einem der vorhergehenden Ansprüche, wobei das thermoplastische Substrat (8) des Schalenelements (2) vor dem Aufbringen der Filamente (4; 4a, 4b, 4c, ..., 4n) durch einen zweiten Laserstrahl (9) zum Verbinden mit den Filamenten (4; 4a, 4b, 4c, ..., 4n) lokal erwärmt wird.

5. Verfahren nach einem der vorhergehenden Ansprüche, wobei nach dem Erhitzen die Filamente (4; 4a, 4b, 4c, ..., 4n) mittels mindestens eines Bügelkissens (10) konsolidiert werden.

6. Verfahren nach einem der vorhergehenden Ansprüche, wobei die Filamente (4; 4a, 4b, 4c, ..., 4n) so angeordnet werden, dass sie zusammen mit dem Schalenelement (2) ein Fachwerkprofil, insbesondere ein Hutprofil, ein Sechseckprofil oder ein T- Profil, formen.

7. Verfahren nach einem der vorhergehenden Ansprüche, wobei zwischen zwei Kreuzungspunkten (5) jedes Filament (4; 4a, 4b, 4c, ..., 4n) eine unabhängige Fachwerkstrebe bildet.

8. Verfahren nach einem der vorhergehenden Ansprüche, wobei zum Anbringen der Versteifungsstruktur:
- ein erstes Filament (4a) an einem ersten Ende (11) mit dem Schalenelement (2) verbunden wird, dann dreidimensional freistehend entlang einer vorbestimmten Trajektorie des Gitterfachwerks (6; 6'; 6") geformt und an einem zweiten Ende (12) mit dem Schalenelement (2) verbunden wird; und
- ein zweites Filament (4b) an einem ersten Ende (13) mit dem Schalenelement (2) verbunden wird, dann dreidimensional entlang einer vorbestimmten Bahn des Gitterfachwerks (6; 6'; 6") geformt wird, die das erste Filament (4a) kreuzt, an einem Kreuzungspunkt (5) mit dem ersten Filament (4a) verbunden wird und an einem zweiten Ende (14) mit dem Schalenelement (2) verbunden wird.

9. Verfahren nach Anspruch 8, wobei ein drittes Filament (4c) und/oder weitere Filamente (4n) entlang einer vorbestimmten Trajektorie des Gitterfachwerks (6; 6'; 6"), die das erste Filament (4a) und das zweite Filament (4b) kreuzt, dreidimensional geformt und mit dem ersten Filament (4a) und dem zweiten Filament (4b) an jeweiligen Kreuzungspunkten (5) verbunden werden, bis das Gitterfachwerk vollständig ist.

10. Strukturbauteil (1) für eine Flugzeugstruktur (21), umfassend:
ein Schalenelement (2), das ein thermoplastisches Substrat (8) umfasst;
und eine Versteifungsstruktur (3), die ein dreidimensionales Gitterfachwerk (6; 6'; 6") umfasst, das einstückig auf dem Schalenelement (2) ausgebildet ist, wobei das Gitterfachwerk (6; 6'; 6") eine Mehrzahl von kontinuierlichen thermoplastischen Filamenten (4; 4a, 4b, 4c, ...., 4n) aufweisen, die Verstärkungsfasern umfassen, wobei die Filamente einander kreuzend angeordnet und an ihren Kreuzungspunkten (5) miteinander verbunden sind und an Berührungspunkten oder -linien (15; 11, 12, 13, 14) zwischen den Filamenten (4; 4a, 4b, 4c, ..., 4n) und dem Schalenelement (2) mit dem Schalenelement (2) verbunden sind.

11. Strukturbauteil (1) nach Anspruch 10, wobei die Filamente (4; 4a, 4b, 4c, ..., 4n) aus einem mit Endlosfasern, insbesondere Endloskohlenstofffasern, umfassenden thermoplastischen Matrixmaterial bestehen.

12. Strukturbauteil (1) nach Anspruch 10 oder 11, **dadurch gekennzeichnet, dass** die Filamente (4; 4a, 4b, 4c, ..., 4n) an einigen Kreuzungspunkten gekrümmt und zwischen den Kreuzungspunkten gerade sind, um eine dreidimensionale Kontur des Fachwerks zu bilden.

13. Strukturbauteil (1) nach einem der Ansprüche 10 bis 12, wobei die Filamente (4; 4a, 4b, 4c, ..., 4n) in einer Dreiecksgitterkonfiguration, insbesondere in einer Iso-Gitterkonfiguration, angeordnet sind.

14. Strukturbauteil (1) nach einem der Ansprüche 10 bis 13, **dadurch gekennzeichnet, dass** die Filamente (4; 4a, 4b, 4c, ..., 4n) so angeordnet sind, dass sie zusammen mit dem Schalenelement (2) ein Fachwerkprofil, insbesondere mit Hutprofil, Sechseckprofil oder T-Profil bilden.

15. Luft- oder Raumfahrzeug (20) mit einer Flugzeugstruktur (21), wobei die Flugzeugstruktur (21) ein Strukturbauteil (1) nach einem der Ansprüche 10 bis 14 umfasst und/oder mit einem Verfahren nach einem der Ansprüche 1 bis 9 hergestellt ist.

## Revendications

1. Procédé de fabrication d'un élément structurel (1) pour une structure d'avion (21) d'un aéronef ou d'un véhicule spatial (20), comprenant:
fournir un élément de coque préfabriqué (2) comprenant un substrat thermoplastique (8); et
Application d'une structure de renforcement (3) à l'élément de coque (2) par fabrication additive, dans laquelle une pluralité de filaments thermoplastiques continus (4; 4a, 4b, 4c, ..., 4n) comprenant des fibres de renforcement sont chauffés en continu et formés en trois dimensions de telle sorte que les filaments (4; 4a, 4b, 4c, ..., 4n) sont reliés entre eux par des points d'intersection et des points de jonction...., 4n) se croisent et sont reliés entre eux en une pluralité de points de croisement (5) pour former un treillis tridimensionnel (6 ; 6' ; 6") qui est formé d'un seul tenant sur l'élément de coque (2).

2. Procédé selon la revendication 1, dans lequel les filaments (4a, 4b, 4c, ..., 4n) sont constitués d'un matériau de matrice thermoplastique qui comprend des fibres continues, en particulier des fibres de carbone continues.

3. Procédé selon la revendication 1 ou 2, dans lequel les filaments (4 ; 4a, 4b, 4c, ..., 4n) sont chauffés au moins localement à une température de fusion avant d'être appliqués par un premier faisceau laser (7) afin de se lier entre eux et/ou à l'élément de coque (2).

4. Procédé selon l'une quelconque des revendications précédentes, dans lequel le substrat thermoplastique (8) de l'élément de coque (2) est chauffé localement par un second faisceau laser (9) avant l'application des filaments (4 ; 4a, 4b, 4c, ..., 4n) pour la liaison avec les filaments (4 ; 4a, 4b, 4c, ..., 4n).

5. Procédé selon l'une quelconque des revendications précédentes, dans lequel, après chauffage, les filaments (4 ; 4a, 4b, 4c, ..., 4n) sont consolidés au moyen d'au moins un tampon de repassage (10).

6. Procédé selon l'une quelconque des revendications précédentes, dans lequel les filaments (4 ; 4a, 4b, 4c, ..., 4n) sont disposés de manière à former, avec l'élément de coque (2), un profilé en treillis, notamment un profilé en chapeau, un profilé hexagonal ou un profilé en T.

7. Procédé selon l'une quelconque des revendications précédentes, dans lequel, entre deux points de croisement (5), chaque filament (4 ; 4a, 4b, 4c, ..., 4n) forme une entretoise de treillis non dépendante.

8. Procédé selon l'une quelconque des revendications précédentes, dans lequel, pour la mise en place de la structure de renforcement:
- un premier filament (4a) est relié à une première extrémité (11) à l'élément de coque (2), puis est formé de façon autonome en trois dimensions le long d'une trajectoire prédéterminée du treillis (6 ; 6' ; 6") et est relié à une seconde extrémité (12) à l'élément de coque (2); et
- un deuxième filament (4b) est relié à une première extrémité (13) à l'élément de coque (2), puis est formé en trois dimensions le long d'une trajectoire prédéterminée du treillis (6 ; 6' ; 6") qui croise le premier filament (4a), est relié au premier filament (4a) à un point de croisement (5) et est relié à l'élément de coque (2) à une deuxième extrémité (14).

9. Procédé selon la revendication 8, dans lequel un troisième filament (4c) et/ou d'autres filaments (4n) sont formés en trois dimensions le long d'une trajectoire prédéterminée du treillis (6 ; 6' ; 6") qui croise le premier filament (4a) et le deuxième filament (4b) et sont liés au premier filament (4a) et au deuxième filament (4b) à des points de croisement respectifs (5) jusqu'à ce que le treillis soit complet.

10. Élément structurel (1) pour une structure d'aéronef (21), comprenant:
un élément de coque (2) comprenant un substrat thermoplastique (8); et une structure de renforcement (3) comprenant un treillis tridimensionnel (6 ; 6' ; 6") formé d'un seul tenant sur l'élément de coque (2), le treillis (6 ; 6' ; 6") comprenant une pluralité de filaments thermoplastiques continus (4; 4a, 4b, 4c, ...., 4n) comprenant des fibres de renforcement, les filaments étant disposés de manière à se croiser et étant reliés entre eux au niveau de leurs points de croisement (5) et étant reliés à l'élément de coque (2) au niveau de points ou de lignes de contact (15 ; 11, 12, 13, 14) entre les filaments (4 ; 4a, 4b, 4c, ..., 4n) et l'élément de coque (2).

11. Élément structurel (1) selon la revendication 10, dans lequel les filaments (4 ; 4a, 4b, 4c, ..., 4n) sont constitués d'un matériau de matrice thermoplastique comprenant des fibres continues, en particulier des fibres de carbone continues.

12. Elément de structure (1) selon la revendication 10 ou 11, **caractérisé en ce que** les filaments (4; 4a, 4b, 4c, ..., 4n) sont courbés en certains points de croisement et sont droits entre les points de croisement pour former un contour tridimensionnel de la charpente.

13. Elément structurel (1) selon l'une quelconque des revendications 10 à 12, dans lequel les filaments (4 ; 4a, 4b, 4c, ..., 4n) sont disposés dans une configuration de réseau triangulaire, notamment dans une configuration d'iso-réseau.

14. Elément de structure (1) selon l'une des revendications 10 à 13, **caractérisé en ce que** les filaments (4 ; 4a, 4b, 4c, ..., 4n) sont disposés de manière à former, avec l'élément de coque (2), un profilé en treillis, en particulier à profil en chapeau, à profil hexagonal ou à profil en T.

15. Véhicule aérien ou spatial (20) comprenant une structure d'avion (21), la structure d'avion (21) comprenant un élément structurel (1) selon l'une quelconque des revendications 10 à 14 et/ou étant fabriquée par un procédé selon l'une quelconque des revendications 1 à 9.
